# EUROPEAN PATENT SPECIFICATION

(11) **EP 2 052 880 B1**
(45) Date of publication and mention of the grant of the patent: **27.03.2013**
(21) Application number: 08167444.2
(22) Date of filing: 23.10.2008
(51) Int. Cl.: B60C 11/00

(54) **Tire with wear resistant rubber tread**
Luftreifen mit abriebfester Gummilauffläche
Pneumatique avec une bande de roulement en caoutchouc résistante à l'usure

(30) Priority: 26.10.2007 US 924855
(43) Date of publication of application: 29.04.2009
(73) Proprietor: The Goodyear Tire & Rubber Company, Akron, OH 44316-0001 (US)
(72) Inventor: Loewenhaupt, Bernd Richard, 68649 Rohrheim (DE); Zotz, Bernd, 63450 Hanau (DE); Maegerle, Wolfgang Karl, 63526 Erlensee (DE)
(74) Representative: Kutsch, Bernd

(56) References cited:
- EP-A- 0 718 127
- EP-A- 0 798 142
- EP-A- 1 745 946
- DE-A1- 19 812 934
- JP-A- 11 321 237
- JP-A- 2001 010 308

## Description

### Field of the Invention

The invention relates to a tire having a composite rubber tread band disposed circumferentially around a tire carcass. The tread band comprises a cap/base construction composed of an outer tread cap rubber layer which provides a primary portion of the running surface for the tire tread and a preferably unitary tread base layer underlying said tread cap layer which extends radially outward to the tread running surface to provide a secondary portion of the running surface of the tread. The rubber composition of said tread base layer and the corresponding secondary lateral portion of the running surface of the tread has a greater resistance to wear than the rubber composition of said tread cap layer.

### Background for the Invention

Tire treads for pneumatic tires typically have running surfaces of consistent rubber properties across the face of the tread intended to be ground contacting.

Sometimes one or more of the peripheral, or lateral, portions of the running surface of the tread may tend to experience a greater rate of wear than the more central portion of the tread running surface.

For this invention, a tread running surface is provided which is preferably composed of a two or three zones, namely a primary running surface zone and one or two lateral running surface zone(s) located at a lateral peripheral portion of the tread running surface, wherein the lateral running surface zone(s) is(are) of a rubber composition having a greater resistance to abrasion, or wear, than the rubber composition of the primary running tread running surface.

This allows it to optimize the wear properties of the tires while not negatively affecting its handling properties.

The tread cap layer and tread base layer thereby provide two distinct circumferential load-bearing tread running surface zones which contain reinforcing fillers selected from silica, preferably precipitated silica, and carbon black. The rubber tread cap layer and rubber tread base layer are preferably co-extruded together to form an integral tread rubber composite.

In practice, the rubber composition of the tread rubber base layer and its associated tread running surface contains sufficient rubber reinforcing carbon black so that an electrically conductive path is provided from the tread base layer radially outward to the running surface of the tire.

Historically, tires have been suggested which contain at least three circumferential portions intended to promote various properties for the running surface of the tire tread. For example, see US-A- 6,959,744 for a tread having lateral wear resistant properties, and US-A- 7,131,474 as well as EP-A- 0 993 381.

The tire tread running surface of the present invention is different from the above publications. For this invention, a tire tread of two or more (for example two or three) significantly wide, distinct load-bearing running surface zones, namely a primary tread running surface and one or two, preferably one, outboard, lateral tread running surface(s) of which the lateral tread running surface(s) have greater wear resistance than the primary running surface, each of which contain carbon black reinforcement and are thereby black in color and for which the lateral tread running surface zone tread and base rubber layer are of a unified rubber composition.

EP-A- 864 446 relates to a tire having a tread with a central portion and side portions positioned directly onto a tire carcass belt without a tread base transition layer. The side portions are carbon black rich and the central portion is silica rich, wherein the silica content of the central portion is at least 20 percent higher than in the side portions.

By requiring the tread running surface zones of the tread of this invention to be load-bearing, it is meant that each of the two or more (for example two or three) distinct tread running surfaces, namely the primary tread zone and the lateral tread zone(s), extend radially inward from the outer surface of the tread to the underlying carbon black-rich tread base rubber composition (with the lateral tread running surface zone(s) being unified with and of the same rubber composition and thereby a part of said tread base rubber layer) so that all of the load on the tire is communicated by the tread running surface zones directly to the tread base layer instead of directly to remainder of the tire carcass itself.

By requiring that each of the running surface tread zones be significantly wide, and therefore each comprising a significant portion of the tread running surface, it is intended that each respective zone, including the later tread running surface zone, to more effectively transmit a significant load from the outer surface of the running surface of the tire directly radially inward to the supportive tread base layer. In practice and as one embodiment of the invention, the primary tread running surface zone spans from 60 to 95 percent, preferably 75 to 95 percent, more preferably 87 to 93 percent, of the width of the tread running surface and the lateral tread zone(s) spans from 5 to 40 percent, preferably 5 to 25 percent, more preferably 7 to 13 percent of the width of the tread running surface. In practice, each individual lateral running surface is preferably at least 2 cm wide at the tread running surface and more preferably from 2 cm to 10 cm such as from 3 cm to 6 cm wide at the tread running surface. Such span of the tread running surface is the surface of the tread lugs of the tread cap layer intended to be ground-contacting inclusive of the tread groove openings which extend to the running surface.

For this invention, the primary tread cap running surface zone preferably is of a silica-rich, carbon black-containing rubber composition.

The lateral tread running surface zone(s), and corresponding tread base rubber layer is preferably of a carbon black-rich rubber composition zones which contain reinforcement filler as both carbon black and silica reinforcement.

A significant aspect of the invention is the providing of a tire tread of a cap/base construction with a primary running surface and at least one lateral running surface, preferably an asymmetrical running surface comprising a primary running surface and one lateral running surface, where the lateral running surface has a greater wear resistance than the primary running surface and where the rubber composition of the lateral running surface is a projection of, unified with and preferably of the same rubber composition as the tread base layer.

This is considered herein as being particularly significant in the sense that a significant portion (e.g. at least 5 percent) or the running surface is the projected tread base layer which further constitutes a path of reduced electrical resistance for the tire tread.

Accordingly, a significant aspect of the invention is the significantly transversally (axially) wide individual circumferential load bearing tread cap zones which extend radially from the tread cap running surface to the underlying, supportive tread base layer rather than more simply only extending directly to the tire carcass and particularly only to a tire carcass belt layer, with the rubber composition of the lateral tread zone being a part of and of the same rubber composition as the tread base rubber layer.

In particular, it is considered herein that providing a tire tread having a lateral portion of its running surface, particularly together with a tread base layer having a higher resistance to wear than the remainder of the tread running surface is a significant departure from past practice.

Therefore, a purpose of such tread cap zone configuration is to provide a running surface for a tire composed of the two, rather than three, circumferential load bearing zones in which the rubber composition for the lateral tread running surface zone is intended to promote resistance to abrasion, or tread wear, of a lateral portion of the running surface of the tread.

The tread cap lateral zone rubber composition contains both silica and rubber reinforcing carbon black reinforcement with the carbon black content being greater than the silica content. The primary tread cap zone rubber composition is relatively a silica rich rubber composition which contains both silica and rubber reinforcing carbon black with the silica content being greater than the carbon black content.

In the description of this invention, the terms "rubber" and "elastomer" where herein, are used interchangeably, unless otherwise provided. The terms "rubber composition", "compounded rubber" and "rubber compound", if used herein, are used interchangeably to refer to "rubber which has been blended or mixed with various ingredients and materials" and such terms are well known to those having skill in the rubber mixing or rubber compounding art.

In the description of this invention, the term "phr" refers to parts of a respective material per 100 parts by weight of rubber, or elastomer. The terms "cure" and "vulcanize" may be used interchangeably unless otherwise provided.

EP-A- 1 745 946 describes a tire in accordance with the preamble of claim 1.

### Summary and Practice of the Invention

The invention relates to a tire according to claim 1. Dependent claims refer to preferred embodiments of the invention.

In accordance with a preferred embodiment of this invention, a tire is provided having a rubber tread of a co-extruded cap/base layered construction with a running (ground contacting) surface, wherein said cap/base configured tread comprises an outer tread cap rubber layer and a tread base rubber layer underlying said outer tread cap rubber layer,
wherein said tread is of a lug and groove configuration,
wherein said tread running surface comprises a primary tread zone comprising said outer tread cap rubber layer and one or two lateral (peripheral) tread zones, preferably one lateral tread zone,
wherein said lateral tread zone(s) are comprised of said tread base rubber layer which extends radially outward from and as a part of said base rubber layer to the running surface of the tread;
wherein said lateral tread zone(s) are positioned axially outboard of said primary tread zone,
wherein said tread zones extend radially inward from the running surface of the tread to said tread base layer, wherein, based upon parts by weight per 100 parts by weight rubber (phr)
(A) said tread base layer and said lateral tread running surface zone(s) are of the same rubber composition and contain from 40 to 90 phr of rubber reinforcing filler comprising:
   (1) from 20 to 80, alternately from 25 to 65, phr of rubber reinforcing carbon black, and
   (2) from 10 to 40, alternately 5 to 35, phr of silica, preferably precipitated silica, (in one aspect, the rubber reinforcing and wherein the weight ratio said carbon black to said silica is in a range of from 60/40 to 80/20, and
   (3) a coupling agent having a moiety reactive with hydroxyl groups (e.g. silanol groups) contained on the surface of said silica and another moiety interactive with said diene-based elastomer(s);
(B) said primary tread cap zone running surface comprises a rubber composition which contains from 40 to 100 phr of rubber reinforcing filler comprising:
   (1) 40 to 100, alternately 30 to 70, phr of silica, preferably precipitated silica, and
   (2) from zero to 40, alternately 10 to 30, phr of rubber reinforcing carbon black,
      wherein the weight ratio of carbon black to silica is in a range between 1/8 to 1/1, i.e. the silica is in the majority insofar as silica and carbon black are concerned;
   (3) a coupling agent having a moiety reactive with hydroxyl groups (e.g. silanol groups) contained on the surface of said silica and another moiety interactive with said diene-based elastomer(s);
wherein said rubber composition of said lateral tread zone running surface and said tread base layer has a greater wear resistance than the primary tread running surface.

As hereinbefore mentioned, in one aspect of the invention, the said tread cap and tread base rubber layers are preferably co-extruded together to form an integral and unified tread composite thereof.

The wear resistance of the lateral tread cap zones may, for example, be promoted by an inclusion of a greater amount of cis 1,4-polybutadiene rubber to the rubber composition, a rubber compounding aspect well known to those having skill in such art.

It is envisioned herein that the tread running surface might be provided, for example, with distinct zones, namely a primary running surface zone and one lateral zone where the lateral zone, and associated tread base layer, have a greater resistance to wear than the primary running surface zone promoted by use of low Tg elastomers and having a higher low strain shear modulus G' and a primary running surface zone for which it is desired to promote traction for the tread promoted by use of higher Tg elastomers and reduced low shear strain modulus G'.

Therefore, the invention is also directed to a structural configuration of a tire tread combined with distinct, zoned, individual rubber compositions for the running surface of the tread.

It is envisioned herein that the tread running surface zones might be provided, for example with a rubber composition having a low strain modulus G' value in a range of, for example, from 3 to 30 MPa for the primary running surface zone and a rubber composition having a low strain modulus G' value in a range of from 5 to 50 MPa for the lateral zone. Preferably, the difference in the strain modulus between primary surface zone and lateral zone(s) is at least 3 MPa, more preferably at least 5 MPa, with the value in the lateral zone(s) being the higher one.

It is envisioned herein that the rubber composition of the primary running surface zone might have, for example, a tan delta value at a low 10 percent strain at 10 Hertz at 0°C in a range of, for example, 0.12 to 0.50.

### Brief Description of the Drawings

For a further understanding of this invention, drawings are provided. Figure 1 is a partial cross-sectional view of a tire having a tread of a cap/base construction, Figure 2 and Figure 3 are cross-sectional views of a tire tread strip.

### Detailed Specification

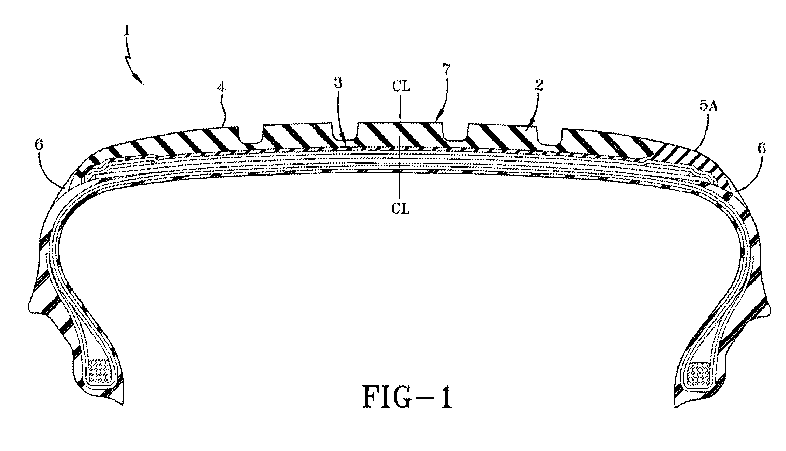

FIG 1 depicts, as a comparative example, a tire 1 having a tread comprised of a tread cap layer 2 of a lug and groove configuration underlying tread base layer 3.

The asymmetrical tread running surface 7 comprises two annular, circumferential zones of rubber compositions comprising a primary running surface zone 4 and a lateral, outboard, peripheral, asymmetrical tread running surface zone 5A.

The lateral tread running surface 5A and the tread base rubber layer 3 are of the same rubber composition having a greater wear resistance than the primary tread running surface 4.

The two zones of the tread running surface 7 extend radially inward from the tread running surface 7 to the tread base layer 3 and not to the remainder of the carcass plies or carcass belt layer.

In particular, said primary tread running surface zone 4 and asymmetrical running surface lateral zone 5A constitute the running surface of the tire 7 normally intended to be ground contacting with the outboard, peripheral edges of the running surface 7 slightly rounded to accommodate the turning and handling of the tire 1.

For FIG 1, the primary tread running surface zone 4 is depicted as constituting 90 percent of the tread running surface 7, although not depicted exactly to scale in FIG 1, and the individual lateral asymmetrical running surface zone 5A constitutes 10 percent running surface of the tire tread 7.

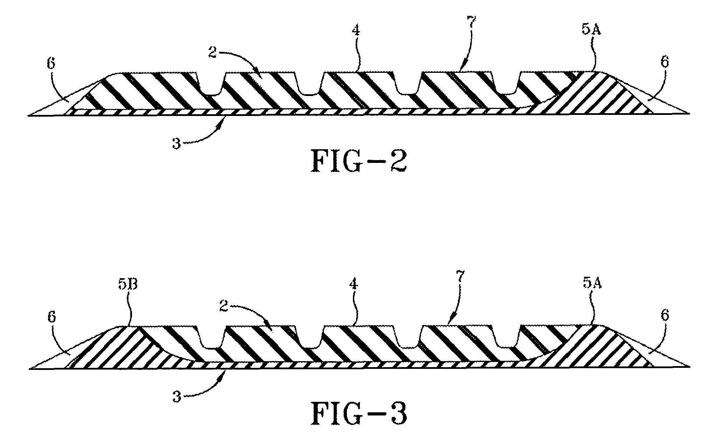

For FIG 2, a tread strip is shown having an asymmetrical running surface 7 comprising the primary running surface 4 and individual lateral, peripheral tread running surface 5A and outboard tread wings 6. The tire with the circumferential tread strip is mounted on a vehicle with the lateral tread running surface 5A positioned as an axially inner tread running surface relative to the associated vehicle.

The unitary lateral tread running surface 5A and tread base rubber layer 3 are of a rubber composition having a greater wear resistance than the primary tread running surface 4.

For FIG 3, a tread strip is shown as a comparative example having its running surface 7 composed of two lateral tread running surfaces 5A, 5B with the primary tread running surface 4 positioned between the lateral running surfaces 5A and 5B.

The unitary lateral tread running surfaces 5A, 5B and tread base rubber layer 3 are of a rubber composition having a greater wear resistance than the primary tread running surface 4.

In practice, the coupling agent for the respective rubber compositions of the tread which contain silica reinforcement may, for example, be comprised of an alkoxysilyl polysulfide such as for example, a bis(3-trialkoxysilylalkyl) polysulfide wherein alkyl radicals for said alkoxy groups are selected from one or more of methyl and ethyl radicals, preferably an ethyl radical and the alkyl radical for said silylalkyl component is selected from butyl, propyl and amyl radicals, preferably a propyl radical and wherein said polysulfide component contains from 2 to 8, with an average of from 2 to 2.6 or an average of from 3.5 to 4, connecting sulfur atoms in its polysulfidic bridge, preferably an average of from 2 to 2.6 connecting sulfur atoms to the exclusion of such polysulfides having greater than 2.6 connecting sulfur atoms.

Representative of such coupling agents are, for example, bis(3-triethoxysilylpropyl) polysulfide having an average of from 2 to 2.6 or an average of from 3.5 to 4, connecting sulfur atoms in its polysulfidic bridge, preferably an average of from 2 to 2.6 connecting sulfur atoms to the exclusion of a bis(3-teiethoxysilanepropyl) polysulfide containing an average of greater than 2.6 connecting sulfur atoms in its polysulfidic bridge.

Such coupling agent may, for example, be added directly to the elastomer mixture or may be added as a composite of precipitated silica and such coupling agent formed by treating a precipitated silica therewith or by treating a colloidal silica therewith and precipitating the resulting composite.

In practice, the synthetic amorphous silica may be selected from aggregates of precipitated silica, which is intended to include precipitated aluminosilicates as a co-precipitated silica and aluminum.

Such precipitated silica is, in general, well known to those having skill in such art. For example, such precipitated silica may be precipitated by controlled addition of an acid such as, for example, hydrochloric acid or sulfuric acid, to a basic solution (e.g. sodium hydroxide) of a silicate, for example, sodium silicate, usually in the presence of an electrolyte, for example, sodium sulfate. Primary, colloidal silica particles typically form during such process which quickly coalesce to form aggregates of such primary particles and which are then recovered as precipitates by filtering, washing the resulting filter cake with water or an aqueous solution, and drying the recovered precipitated silica.

The precipitated silica aggregates preferably employed in this invention are precipitated silicas such as, for example, those obtained by the acidification of a soluble silicate, e.g., sodium silicate and may include co-precipitated silica and a minor amount of aluminum.

Such silicas might usually be characterized, for example, by having a BET surface area, as measured using nitrogen gas, preferably in the range of 40 to 600, and more usually in a range of 50 to 300 square meters per gram.

The silica may also be typically characterized by having a dibutylphthalate (DBP) absorption value in a range of 50 to 400 cm³/100g, and more usually 100 to 300 cm³/100g.

Various commercially available precipitated silicas may be considered for use in this invention such as, only for example herein, and without limitation, silicas from PPG Industries under the Hi-Sil trademark with designations Hi-Sil 210, Hi-Sil 243, etc; silicas from Rhodia as, for example, Zeosil 1165MP™ and Zeosil 165GR™; silicas from J. M. Huber Corporation as, for example, Zeopol 8745™ and Zeopol 8715™ and silicas from Degussa AG with, for example, designations VN2™, VN3™ and Ultrasil 7005™ as well as other grades of silica, particularly precipitated silicas, which can be used for elastomer reinforcement.

Representative examples of other silica couplers may be organomercaptosilanes such as, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

In practice, the invention the rubber compositions may be prepared in a sequential series of at least two separate and individual preparatory internal rubber mixing steps, or stages, in which the diene-based elastomer is first mixed with the prescribed carbon black and/or silica in a subsequent, separate mixing step and followed by a final mixing step where curatives are blended at a lower temperature and for a substantially shorter period of time.

It is conventionally required after each mixing step that the rubber mixture is actually removed from the rubber mixer and cooled to a temperature of less than 40°C and, for example, in a range of 40°C to 20°C and then added back to an internal rubber mixer for the next sequential mixing step, or stage.

The forming of a tire component is contemplated to be by conventional means such as, for example, by extrusion of rubber composition to provide a shaped, unvulcanized rubber component such as, for example, a tire tread.

It is understood that the tire, as a manufactured article, is prepared by shaping and sulfur curing the assembly of its components at an elevated temperature (e.g. 140°C to 180°C) and elevated pressure in a suitable mold.

It is readily understood by those having skill in the art that the rubber composition would be compounded by methods generally known in the rubber compounding art, such as mixing the various sulfur-vulcanizable constituent rubbers with various commonly used additive materials, as herein before discussed, such as, for example, curing aids such as sulfur, activators, retarders and accelerators, processing additives, such as rubber processing oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical amounts of fatty acids, if used which can include stearic acid, comprise 0.5 to 3 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, or even, in some circumstances, up to 8 phr, with a range of from 1.5 to 2.5, being preferred.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4. In another embodiment, combinations of a primary and a secondary accelerator might be used with the secondary accelerator being used in smaller amounts (of 0.05 to 3 phr) in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can preferably be accomplished by the aforesaid sequential mixing process. For example, the ingredients may be mixed in at least three stages, namely, at least two non-productive (preparatory) stages followed by a productive (final) mix stage. The final curatives are typically mixed in the final stage which is conventionally called the "productive" or "final" mix stage in which the mixing typically occurs at a temperature, or ultimate temperature, lower than the mix temperature(s) of the preceding non-productive mix stage(s).

A tire is built having a tread of cap/base construction similar to FIG 1 with a primary tread running surface and a lateral, peripheral tread running surface.

## Claims

1. A tire having a rubber tread with a running surface (7) wherein the tread comprises an outer tread cap rubber layer (2) and a tread base rubber layer (3) at least partially underlying said outer tread cap rubber layer; wherein the running surface (7) includes one primary tread zone (4) and one lateral tread zone (5A); wherein the lateral tread zone extends radially outward from and as a part of said base rubber layer to the running surface of the tread; wherein the lateral tread zone (5A) is positioned axially outboard of the primary tread zone (4); wherein, based upon parts by weight per 100 parts by weight rubber (phr):
(A) the lateral tread zone (5A) comprises a rubber composition which contains contain from 40 to 90 phr of a rubber reinforcing filler comprising:
(1) from 25 to 65 phr of a rubber reinforcing carbon black, and
(2) from 5 to 35 phr of silica,
(B) the primary tread zone (4) comprises of a rubber composition which contains from 40 to 100 phr of rubber reinforcing filler comprising:
(1) 30 to 70 phr of silica, and
(2) from 10 to 30 of a rubber reinforcing carbon black,
wherein the weight ratio of carbon black to silica is in a range between from 1/8 to 1/1; **characterized in that**
the rubber composition of the lateral tread zone has a greater wear resistance than the rubber composition of the primary tread zone; and
the running surface (7) is an asymmetrical running surface comprising the one primary tread zone (4) and the one lateral tread zone (5A), the lateral tread zone (5A) being located on the inboard side of the tire (1) when the tire is mounted on a vehicle in accordance with the tire specification.

2. The tire of claim 1 wherein the tread base layer (3) and the lateral tread zone (5A) are of the same rubber composition.

3. The tire of claim 1 or 2 wherein the tread base layer (3) and the lateral tread zone (5A) are co-extruded.

4. The tire of at least one of the previous claims wherein for the rubber composition in the lateral tread zone the weight ratio of the carbon black to silica is in a range of from 60/40 to 80/20.

5. The tire of at least one of the previous claims wherein for the rubber composition in the primary zone the weight ratio of carbon black to silica is in a range between from 1/4 to 1/2.

6. The tire of at least one of the previous claims wherein the rubber composition of the lateral tread zone and/or the rubber composition of the primary tread zone comprises a coupling agent having a moiety reactive with hydroxyl groups on the surface of the silica and another moiety interactive with elastomer.

7. The tire of at least one of the previous claims wherein the primary tread zone (4) spans from 60 to 95 percent of the width of the running surface (7) and the lateral tread zone (5A) spans from 5 to 40 percent of the width of the running surface.

8. The tire of at least one of the previous claims wherein each individual lateral tread zone (5A) is at least 2 cm wide or is from 2 cm to 10 cm wide.

9. The tire of at least one of the previous claims wherein the primary tread zone (4) spans from 87 to 93 percent of the width of the running surface (7) and the lateral tread zone (5A) spans from 13 to 7 percent of the width of the running surface (7).

10. The tire of at least one of the previous claims wherein the rubber composition of the lateral tread zone (5A) have a low strain shear modulus G' in a range of from 3 to 30 MPa and the rubber composition of the primary tread zone (4) has a low strain shear modulus G' in a range of from 5 to 50 MPa with the low strain shear modulus G' in the lateral zone being lower than in the primary tread zone.

11. The tire of at least one of the previous claims wherein the rubber composition of the lateral tread zone (5A) have an at least 10% greater wear resistance than the rubber composition of the primary tread zone (4).

12. The tire of at least one of the previous claims wherein the rubber composition of the lateral tread zone (5A) have an at least 30% greater wear resistance than the rubber composition of the primary tread zone (4).

13. The tire of at least one of the previous claims wherein the rubber composition of the lateral tread zone (5A) and of the primary tread zone (4) each comprise cis-1,4-polybutadiene rubber with the rubber composition of the lateral zone comprising a higher cis-1,4-polybutadiene rubber content than the rubber composition of the primary tread zone (4).

14. The tire of at least one of the previous claims wherein the lateral tread zone (5A) and the tread rubber base layer (3) provide a path of electrical conductivity to the running surface (7) of the tread through the running surface.

## Patentansprüche

1. Reifen mit einer Kautschuklauffläche mit einer Laufoberfläche (7), wobei die Lauffläche eine äußere Laufstreifenoberteilkautschukschicht (2) und eine mindestens teilweise unter der äußeren Laufstreifenoberteilkautschukschicht liegende Laufstreifenunterteilkautschukschicht (3) umfasst; wobei die Laufoberfläche (7) eine primäre Laufflächenzone (4) und eine seitliche Laufflächenzone (5A) beinhaltet; wobei die seitliche Laufflächenzone sich radial auswärts von und als ein Teil der Unterteilkautschukschicht bis zu der Laufoberfläche der Lauffläche erstreckt; wobei die seitliche Laufflächenzone (5A) axial außerhalb von der primären Laufflächenzone (4) positioniert ist; wobei, auf Basis von Gewichtsteilen je 100 Gewichtsteile Kautschuk (ThK):
(A) die seitliche Laufflächenzone (5A) eine Kautschukzusammensetzung umfasst, die 40 bis 90 ThK eines Kautschukverstärkungsfüllstoffs enthält, umfassend:
(1) 25 bis 65 ThK eines Kautschukverstärkungs-Carbon Blacks, und
(2) 5 bis 35 ThK Silika,
(B) die primäre Laufflächenzone (4) aus einer Kautschukzusammensetzung besteht, die 40 bis 100 ThK Kautschukverstärkungsfüllstoff enthält, umfassend:
(1) 30 bis 70 ThK Silika, und
(2) 10 bis 30 eines Kautschukverstärkungs-Carbon Blacks,
wobei das Gewichtsverhältnis von Carbon Black zu Silika in einem Bereich zwischen 1:8 bis 1:1 liegt; **dadurch gekennzeichnet, dass**
die Kautschukzusammensetzung der seitlichen Laufflächenzone eine größere Abriebfestigkeit als die Kautschukzusammensetzung der primären Laufflächenzone aufweist; und
die Laufoberfläche (7) eine asymmetrische Laufoberfläche ist, welche die eine primäre Laufflächenzone (4) und die eine seitliche Laufflächenzone (5A) umfasst, wobei die seitliche Laufflächenzone (5A) sich an der Innenschulter des Reifens (1) befindet, wenn der Reifen in Übereinstimmung mit der Reifenspezifikation an einem Fahrzeug montiert ist.

2. Reifen nach Anspruch 1, wobei die Laufstreifenunterteilschicht (3) und die seitliche Laufflächenzone (5A) aus der gleichen Kautschukzusammensetzung bestehen.

3. Reifen nach Anspruch 1 oder 2, wobei die Laufstreifenunterteilschicht (3) und die seitliche Laufflächenzone (5A) coextrudiert sind.

4. Reifen nach mindestens einem der vorgenannten Ansprüche, wobei für die Kautschukzusammensetzung in der seitlichen Laufflächenzone das Gewichtsverhältnis des Carbon Blacks zu Silika in einem Bereich von 60:40 bis 80:20 liegt.

5. Reifen nach mindestens einem der vorgenannten Ansprüche, wobei für die Kautschukzusammensetzung in der primären Zone das Gewichtsverhältnis von Carbon Black zu Silika in einem Bereich zwischen 1:4 bis 1:2 liegt.

6. Reifen nach mindestens einem der vorgenannten Ansprüche, wobei die Kautschukzusammensetzung der seitlichen Laufflächenzone und/oder die Kautschukzusammensetzung der primären Laufflächenzone einen Haftvermittler umfasst, der einen Anteil, der mit Hydroxylgruppen an der Oberfläche des Silikas reaktiv ist, und einen anderen Anteil, der mit Elastomer in Wechselwirkung tritt, aufweist.

7. Reifen nach mindestens einem der vorgenannten Ansprüche, wobei die primäre Laufflächenzone (4) 60 bis 95 Prozent der Breite der Laufoberfläche (7) überspannt und die seitliche Laufflächenzone (5A) 5 bis 40 Prozent der Breite der Laufoberfläche überspannt.

8. Reifen nach mindestens einem der vorgenannten Ansprüche, wobei jede individuelle Laufflächenzone (5A) mindestens 2 cm breit ist oder 2 cm bis 10 cm breit ist.

9. Reifen nach mindestens einem der vorgenannten Ansprüche, wobei die primäre Laufflächenzone (4) 87 bis 93 Prozent der Breite der Laufoberfläche (7) überspannt und die seitliche Laufflächenzone (5A) 13 bis 7 Prozent der Breite der Laufoberfläche (7) überspannt.

10. Reifen nach mindestens einem der vorgenannten Ansprüche, wobei die Kautschukzusammensetzung der seitlichen Laufflächenzone (5A) einen Schermodul bei niedriger Dehnung G' in einem Bereich von 3 bis 30 MPa aufweist und die Kautschukzusammensetzung der primären Laufflächenzone (4) einen Schermodul bei niedriger Dehnung G' in einem Bereich von 5 bis 50 MPa aufweist, wobei der Schermodul bei niedriger Dehnung G' in der seitlichen Zone niedriger als in der primären Laufflächenzone ist.

11. Reifen nach mindestens einem der vorgenannten Ansprüche, wobei die Kautschukzusammensetzung der seitlichen Laufflächenzone (5A) einen um mindestens 10% größeren Abriebwiderstand aufweist als die Kautschukzusammensetzung der primären Laufflächenzone (4).

12. Reifen nach mindestens einem der vorgenannten Ansprüche, wobei die Kautschukzusammensetzung der seitlichen Laufflächenzone (5A) einen um mindestens 30% größeren Abriebwiderstand aufweist als die Kautschukzusammensetzung der primären Laufflächenzone (4).

13. Reifen nach mindestens einem der vorgenannten Ansprüche, wobei die Kautschukzusammensetzung der seitlichen Laufflächenzone (5A) und der primären Laufflächenzone (4) jede cis-1,4-Polybutadienkautschuk umfassen, wobei die Kautschukzusammensetzung der seitlichen Zone einen höheren cis-1,4-Polybutadienkautschukgehalt aufweist als die Kautschukzusammensetzung der primären Laufflächenzone (4).

14. Reifen nach mindestens einem der vorgenannten Ansprüche, wobei die seitliche Laufflächenzone (5A) und die Laufstreifenunterteilkautschukschicht (3) einen Pfad elektrischer Leitfähigkeit zu der Laufoberfläche (7) der Lauffläche durch die Laufoberfläche bereitstellen.

## Revendications

1. Bandage pneumatique possédant une bande de roulement en caoutchouc comprenant une surface de roulement (7), la bande de roulement comprenant une couche de caoutchouc externe (2) de sommet de bande de roulement et une couche de caoutchouc (3) de base de bande de roulement sous-jacente au moins en partie à ladite couche de caoutchouc externe de sommet de bande de roulement, la surface de roulement (7) englobant une zone de bande de roulement primaire (4) et une zone de bande de roulement latérale (5A), la zone de bande de roulement latérale s'étendant vers l'extérieur en direction radiale à partir de la surface de roulement proprement dite de la bande de roulement et sous la forme d'une partie de ladite couche de caoutchouc de base, la zone de bande de roulement latérale (5A) étant disposée à l'extérieur en direction axiale de la zone de bande de roulement primaire (4), bandage pneumatique dans lequel, en se basant sur des parties en poids par 100 parties en poids de caoutchouc (phr) :
(A) la zone de bande de roulement latérale (5A) comprend une composition de caoutchouc qui contient, à concurrence de 40 à 90 phr, une matière de charge pour le renforcement du caoutchouc, comprenant :
(1) à concurrence de 25 à 65 phr, un noir de carbone pour le renforcement du caoutchouc ; et
(2) à concurrence de 5 à 35 phr, de la silice ;
(B) la zone de bande de roulement primaire (4) comprend une composition de caoutchouc qui contient, à concurrence de 40 à 100 phr, une matière de charge pour le renforcement du caoutchouc, comprenant :
(1) à concurrence de 30 à 70 phr, de la silice ; et
(2) à concurrence de 10 à 30 phr, un noir de carbone pour le renforcement du caoutchouc ;
le rapport pondéral du noir de carbone à la silice se situant dans la plage entre 1/8 et 1/1, **caractérisé en ce que** la composition de caoutchouc de la zone de bande de roulement latérale possède une résistance à l'usure supérieure à celle de la composition de caoutchouc de la zone de bande de roulement primaire ; et
la surface de roulement proprement dite (7) représente une surface de roulement asymétrique comprenant ladite une zone de bande de roulement primaire (4) et ladite une zone de bande de roulement latérale (5A), la zone de bande de roulement latérale (5A) étant située du côté interne du bandage pneumatique (1) lorsque le bandage pneumatique est monté sur un véhicule conformément à la spécification du bandage pneumatique.

2. Bandage pneumatique selon la revendication 1, dans lequel la couche de base (3) de bande de roulement et la zone de bande de roulement latérale (5A) possèdent la même composition de caoutchouc.

3. Bandage pneumatique selon la revendication 1 ou 2, dans lequel la couche de base (3) de bande de roulement et la zone de bande de roulement latérale (5A) sont coextrudées.

4. Bandage pneumatique selon au moins une des revendications précédentes, dans lequel, pour la composition de caoutchouc dans la zone de bande de roulement latérale, le rapport pondéral du noir de carbone à la silice se situe dans la plage de 60/40 à 80/20.

5. Bandage pneumatique selon au moins une des revendications précédentes, dans lequel, pour la composition de caoutchouc dans la zone de bande de roulement primaire, le rapport du noir de carbone à la silice se situe dans la plage entre 1/4 et 1/2.

6. Bandage pneumatique selon au moins une des revendications précédentes, dans lequel la composition de caoutchouc de la zone de bande de roulement latérale et/ou la composition de caoutchouc de la zone de bande de roulement primaire comprennent un agent de couplage possédant une fraction apte à réagir avec les groupes hydroxyle à la surface de la silice et une autre fraction qui entre en interaction avec les élastomères.

7. Bandage pneumatique selon au moins une des revendications précédentes, dans lequel l'étendue de la zone de bande de roulement primaire (4) représente de 60 à 95 % de la largeur de la surface de roulement proprement dite et l'étendue de la zone de bande de roulement latérale (5A) représente de 5 à 40 % de la largeur de la surface de roulement proprement dite.

8. Bandage pneumatique selon au moins une des revendications précédentes, dans lequel chaque zone de bande de roulement latérale individuelle (5A) possède une largeur d'au moins 2 cm ou bien une largeur de 2 cm à 10 cm.

9. Bandage pneumatique selon au moins une des revendications précédentes, dans lequel l'étendue de la zone de bande de roulement primaire (4) représente de 87 à 93 % de la largeur de la surface de roulement proprement dite (7) et l'étendue de la bande de roulement latérale (5A) représente de 13 à 7 % de la largeur de la surface de roulement proprement dite (7).

10. Bandage pneumatique selon au moins une des revendications précédentes, dans lequel la composition de caoutchouc de la zone de bande de roulement latérale (5A) possède un faible module de cisaillement sous contrainte G' dans la plage de 3 à 30 MPa et la composition de caoutchouc de la zone de bande de roulement primaire (4) possède un faible module de cisaillement sous contrainte G' dans la plage de 5 à 50 MPa, le faible module de cisaillement sous contrainte G' dans la zone latérale étant inférieur à celui en vigueur dans la zone de bande de roulement primaire.

11. Bandage pneumatique selon au moins une des revendications précédentes, dans lequel la composition de caoutchouc de la zone de bande de roulement latérale (5A) possède une résistance à l'usure supérieure à concurrence d'au moins 10 % à celle de la composition de caoutchouc de la zone de bande de roulement primaire (4).

12. Bandage pneumatique selon au moins une des revendications précédentes, dans lequel la composition de caoutchouc de la zone de bande de roulement latérale (5A) possède une résistance à l'usure supérieure à concurrence d'au moins 30 % à celle de la composition de caoutchouc de la zone de bande de roulement primaire (4).

13. Bandage pneumatique selon au moins une des revendications précédentes, dans lequel la composition de caoutchouc de la zone de bande de roulement latérale (5A) et celle de la zone de bande de roulement primaire (4) comprennent chacune du caoutchouc de 1,4-cis-polybutadiène, la composition de caoutchouc de la zone latérale possédant une teneur en caoutchouc de 1,4-cis-polybutadiène supérieure à celle de la composition de caoutchouc de la zone de bande de roulement primaire (4).

14. Bandage pneumatique selon au moins une des revendications précédentes, dans lequel la zone de bande de roulement latérale (5A) et la couche de base en caoutchouc (3) de la bande de roulement procurent une voie de conductivité électrique à la surface de roulement proprement dite (7) de la bande de roulement via la surface de roulement proprement dite.
